# EUROPEAN PATENT SPECIFICATION

(11) **EP 2 382 039 B1**
(45) Date of publication and mention of the grant of the patent: **06.06.2012**
(21) Application number: 10704952.0
(22) Date of filing: 26.01.2010
(51) Int. Cl.: B01J 19/12

(54) **MICROWAVE APPARATUS**
MIKROWELLENVORRICHTUNG
APPAREIL MICRO-ONDES

(30) Priority: 26.01.2009 US 202066 P
(43) Date of publication of application: 02.11.2011
(73) Proprietor: Cambrex Karlskoga AB, 691 85 Karlskoga (SE)
(72) Inventor: HAGBERG, Birger, S-691 85 Karlskoga (SE); EKLUND, Lars, S-691 85 Karlskoga (SE)
(74) Representative: Snodin, Michael D.
(86) International application number: PCT/GB2010/000117
(87) International publication number: WO 2010/084333

(56) References cited:
- WO-A1-90/03840
- US-A1- 2005 045 625
- US-A1- 2005 133 498
- US-A1- 2007 012 183

## Description

### Field of the Invention

The present invention relates to a microwave apparatus, a method or use of the apparatus and a method of carrying out chemical reactions on a continuous or stopped flow basis with the apparatus, wherein the apparatus is particularly suitable for microwave-assisted organic synthesis.

### Background

The listing or discussion of an apparently prior-published document in this specification should not necessarily be taken as an acknowledgement that the document is part of the state of the art or is common general knowledge.

Microwave irradiation is electromagnetic irradiation in the frequency range of 0.3 to 300 GHz. All domestic (e.g. kitchen) ovens and all dedicated microwave reactor systems for chemical synthesis operate at a frequency of 2.45 GHz (which corresponds to a wavelength of 12.24 cm) to avoid interference with telecommunication and cellular phone frequencies. The energy of the microwave photon in this frequency is 0.0016 eV, which is too low to break chemical bonds and is also lower than the energy of Brownian motion. Some other prescribed microwave frequencies are 915 MHz, 5.8 GHz and 27.12 GHz.

Microwave-enhanced chemistry is based upon the efficient heating of materials by microwave dielectric heating effects. This phenomenon is dependent on the ability of a specific material (e.g. reactant, reagent or solvent) to absorb microwave energy and convert it into heat. The electric component of an electromagnetic field causes heating by two main mechanisms: dipolar polarisation and ionic conduction. Irradiation of a sample at a commercial microwave frequency (e.g. 2.45 GHz) results in the dipoles and/or ions aligning in the applied electric field. As the applied field oscillates, the dipole or ion field attempts to realign itself with the alternating electric field and, in the process, energy is lost in the form of heat through molecular friction and dielectric loss. The amount of heat generated by this process is directly related to the ability of the matrix to align itself with the frequency of the applied field. If the dipole does not have enough time to realign, or reorients too quickly no heating occurs. The frequency of all commercial microwave devices lies between these two extremes and gives the molecular dipole time to align in the field, but not to follow the alternating field precisely (see Kappe, Angew. Chem. Int. Ed. 2004 6520-6284 and references therein for further information).

Microwave irradiation has long been used as a heat source in a wide range of chemical and chemistry-related processes and techniques. These have typically included large-scale digestion of organic matter or digestion of samples as a preparative step prior to analytical techniques (such as atomic absorption spectroscopy of the digested residues), protein hydrolysis and microwave drying for loss-on-drying moisture content analysis. For the purposes described above, where high local temperature effects are required or desired, microwave heating is particularly suitable because a microwave device can produce relatively large amounts of power in the form of microwaves of a particular wavelength that are scattered by the walls of the microwave cavity to produce varying levels of power within the three-dimensional space defined by the cavity. Indeed, the high efficiency of microwave heating offers advantages over most other types of heating for these purposes.

However, chemical synthesis, and in particular organic synthesis, generally requires a more subtle and careful approach with regard to the application of heat to synthesis reactions. In response to the need for a more careful application of microwave energy for organic synthesis, a number of devices have been developed which accomplish this goal on a laboratory bench-top scale.

A number of reactors are now available on the market place for microwave-assisted organic synthesis (MAOS). For example, CEM^{™}, Milestone^{™} and Biotage^{™} have developed a number of dedicated MAOS devices which all feature built-in magnetic stirrers, direct temperature control of the reaction mixture (e.g. via fibre-optic probes or IR sensors) and software that enables on-line temperature/pressure control by regulation of microwave output power.

Currently, there are two main types of microwave devices, namely multimode and monomode (also called single mode) reactors. In multimode reactors (e.g. the Milestone Multisynth platform) the microwaves that enter the microwave cavity are reflected by the walls and over the entire cavity area, which is generally much larger than a cavity in a monomode reactor. In the (generally) much smaller monomode cavities, only one mode is present and the electromagnetic irradiation is directed through an accurately designed waveguide onto a single reaction vessel mounted at a fixed distance from the radiation source, which creates a standing wave. The key difference between the reactor systems is that multimode reactors can accommodate and irradiate multiple reaction vessels at the same time, whereas a monomode reactor can only accommodate a single reaction vessel.

To date, dedicated monomode instruments can process reaction volumes ranging from 0.2 to about 50 mL under sealed vessel conditions (up to 250°C and approximately 20 bar) and somewhat higher volumes (in the region of 150 mL) under open vessel reflux conditions. In the much larger multi-mode instruments, several litres (with an upper limit of approximately 5 litres) can be processed under both open and closed vessel conditions. However, a major drawback of microwave synthesis is that it has not yet been possible to readily scale up a reaction process from the laboratory to a production scale (see Kappe et al. topics. Curr. Chem (2006), 266, 233). Indeed, most examples of MAOS that have been published have been performed on less than 1 g of material (typically 1 to 5 mL reaction volume).

In the light of the above, it is clear that there is a need to develop MAOS techniques that can ultimately provide products routinely on a multi-kilogram scale (or even higher).

The main limitation in scaling up microwave technology is the limited depth of penetration of microwave irradiation into absorbing materials (e.g. solvents, catalysts, reactants or reagents). At the typical operating frequency of 2.45 GHz, the penetration depth is generally only a few centimetres, although the actual penetration may vary somewhat depending on the dielectric properties of the medium. This means that microwave heating inside a large batch reactor (> 1 L volume) is only effective for the small portion of the total batch that is penetrated by the microwaves. The remaining solvent and reagents in the core of the batch are heated by convection and not by microwave dielectric heating. While using a lower microwave frequency (e.g. 915 MHz) will increase the depth of surface penetration in a large batch reactor, the majority of the reactants, reagents and solvent will reside in the core of the batch and will still be heated by convection.

To compensate for the limited penetration of the microwaves when processing large batches, the power of the magnetron can be increased. Thus, a standard batch reactor can heat mixtures up to 500 mL in comparable rates to small-scale experiments using a standard air-cooled magnetron, which provides a power output of around 1000 W. However, reaction volumes over 500 mL typically require magnetrons with greater power (up to 5000 W) to obtain reaction rates and temperatures equivalent to those obtained in small scale experiments. Such high power magnetrons require sophisticated oil- or water-based cooling systems, which greatly increases the size, cost and complexity of the reactor. Further, as the efficiency of converting electricity to microwave energy is relatively low (70% or less) when compared to converting electricity to heat directly (up to 100% efficiency), magnetrons with increased power become much less attractive for production on a large scale. Finally, the rupturing of a large batch reactor which contains a reaction under high temperatures and pressures under microwave heating carries with it significant safety concerns. Therefore, the scaling up of microwave technology into batch reactors greater than 1 L is unlikely to be feasible.

A possible alternative to large-scale batch reactors are stop-flow reactors, wherein a small batch of reagents are pumped into a reaction vessel, subjected to microwave irradiation until the reaction is complete and the resultant mixture pumped into a new vessel, followed by repetition of the process multiple times. While stop-flow processes may reduce the safety risks associated with traditional batch reactors, they may still suffer from the remaining disadvantages of such systems (e.g. relatively shallow microwave penetration).

In order to truly enable the scale up of chemical reactions from the laboratory bench to the full-scale industrial synthesis with a microwave device, there is a need to develop continuous flow devices, rather than batch systems for use in MAOS. In contrast to the batch systems mentioned above, a continuous flow system allows greater penetration of the reaction mixture by microwaves by exposing a smaller volume to microwave irradiation at any given time, which may be advantageous in overcoming problems associated with the partial microwave heating found in batch reactors. Additionally, as only a small portion of the reaction mixture is heated at any one time, power consumption and the safety risks associated with microwave heating of pressurised organic reactions are minimised.

An additional advantage of a MAOS continuous flow device is that the microwave energy can penetrate the entire volume of the reaction mixture, thereby allowing for the almost instantaneous heating of the mixture to the desired temperature as it flows through the microwave cavity. This increase in heating may allow reactions that were not suitable for flow processing at a reasonable rate under conventional heating to be run (i.e. conventional heating could not attain the desired temperature quickly enough for use in a flow system).

For recent reviews of microwave assisted organic synthesis and the devices (including continuous flow devices) used to conduct the reactions, see Kappe et al. Macromol. Rapid Commun (2007), 28, 395-410; Strauss et al. Top. Curr. Chem. (2006), 266, 199-231; Kremsner et al. Top. Curr. Chem. (2006), 266, 233-278; Kappe, Chimia (2006), 60, 308-312; Le Ngoc et al. Microwaves in Organic Synthesis (2 Ed), A. Loupy (Ed), Wiley-VCH, Weinheim (pub), 2006, pp108-133; and Kappe Angew. Chem. Int. Ed. (2004), 43, 6250-6284.

It is also possible to conduct chemical reactions using whole cells and/or enzymes as the catalyst under microwave conditions. For example, see Shukla et al. Journal of Chemical Technology 8 Biotechnology (2002), 77(2), 137-140.

International patent application Nos. WO 90/003840 and WO 03/041586, as well as US patent application publication No. 2005/133498 disclose continuous flow microwave apparatuses for MAOS, wherein a back-pressure regulator may be attached to the system to directly regulate the pressure of liquid in the system.

US patent No. 5,672,316 discloses a pressurised continuous flow microwave apparatus for use in the heating of liquids and the digestion of organic matter. The pressurised reactor overcomes a problem suffered by pipeline segments within the reactor buckling under high pressures by essentially equalising the pumping pressure of the reaction mixture with the internal pressure of the reaction chamber.

US patent application publication No. 2005/0034972 discloses MAOS devices including a conveyor worm (or the like) for transporting reactants through a microwave chamber.

US patent application publication No. 2007/0012183 discloses a continuous flow microwave apparatus for the production of porous inorganic materials, wherein the reactor is a continuously stirred reactor and back-pressure regulation is employed in order to cope with autogenically produced gas from the reactor.

### Disclosure of the Invention

According to the current invention there is provided an apparatus for continuous or stopped fluid flow microwave assisted organic synthesis, said apparatus comprising:
a feed section comprising a feed vessel;
a microwave heating section comprising a microwave cavity, a microwave source, a waveguide device and a tube-type flow reactor having a fluid inlet and a fluid outlet; and
a receiving section comprising a receiving vessel that is connected to a back-pressure regulator, and, in use, is at least part-filled with gas,
wherein the tube-type flow reactor contains at least one section that is microwave-transparent and is surrounded by a portion of the waveguide device that can be irradiated with microwave energy from the microwave source,
the fluid inlet of the tube-type flow reactor is in fluid connection with the feed section,
the fluid outlet of the tube-type flow reactor is in fluid connection with the receiving section, and
said back-pressure regulator directly regulates the pressure of the gas in said receiving vessel.

When used herein, the term *"microwave-assisted organic synthesis"* includes references to conventional synthetic organic reactions and also to biotransformations. Biotransformations include reactions wherein a cellular preparation, cell lysate or enzyme, is used to catalyse a chemical transformation, conducted under microwave conditions.

When used herein, the term *"enzyme"* includes references to a part- or fully isolated catalytic peptide or metallopeptide from a living system (either in its native form or in chemically modified form).

When used herein, the term *"cellular preparation"* includes references to the whole of the cell or part of the cell containing the active enzyme.

When used herein, the term *"feed vessel"* includes references to vessels capable of containing a reactant(s) or reagent(s) for use in a chemical process and may be applied to, for example, a simple container or any vessel connected to a chemical manufacturing and/or purification plant for the manufacture and/or purification of said reactant(s) or reagent(s). For the avoidance of doubt, the reactant(s) or reagent(s) may be dissolved in an appropriate solvent and/or mixture of solvents.

When used herein, the term *"receiving vessel"* includes references to vessels capable of containing the product(s) of the chemical process using microwave radiation and may be applied to, for example, a container or a vessel, capable of withstanding pressure applied thereto, connected to a chemical manufacturing and/or purification plant for the subsequent reaction and/or purification of said product(s).

When used herein, the term *"back-pressure regulator"* includes references to a simple valve for regulating back-pressure, or to said valve in combination with a pressure transmitter and/or a pressure controller.

When used herein in connection with regulation of gas pressure in the receiving vessel, the term *"directly regulates"* means that the back-pressure regulator is in direct contact with the gas in the receiving vessel and operates by regulating the pressure of that gas.

Further, when used herein in connection with the feed vessel, microwave cavity, microwave source, waveguide device and receiving vessel, the term *"comprises a"* encompasses embodiments of the apparatus in which one or more (e.g. one, two, three or four) feed vessel, microwave cavity, microwave source, waveguide device and/or receiving vessel is present.

When used herein, the term *"tube-type flow reactor"* means a reaction conduit that, in use, is entirely filled with a continuous fluid phase, which continuous fluid phase may incorporate discontinuous solid and/or gas phase(s) (i.e. dispersed particles and/or gas bubbles), and which continuous fluid phase flows through the conduit. Preferably, the bubbles have a diameter of between 0.001 to 150 mm, such as from 0.01 mm to 100 mm, from 0.05 mm to 50 mm, from 0.075 mm to 10 mm, from 0.1 to 6 mm, from 0.15 to 2 mm, from 0.2 to 0.7 mm (e.g. 0.5 mm).

Embodiments of the invention include those in which the fluid connection between the tube-type flow reactor and the feed section is through one or more (e.g. one, two, three or four) transfer lines.

In a preferred embodiment, the apparatus is for continuous fluid flow, microwave-assisted organic synthesis.

In another embodiment, the feed section may comprise a feed vessel with a feed line, wherein the feed line contains a pump suitable for pumping either liquids or slurries, which is connected to the fluid inlet of the tube-type flow reactor by one or more transfer lines.

In an alternative embodiment, the feed section may comprise at least two individual feed vessels (e.g. two, three or four) with separate feed lines, wherein each feed line contains a pump suitable for pumping either liquids or slurries, that converge at a mixing point or mixing chamber, which mixing point or chamber is connected to the fluid inlet of the tube-type flow reactor by one or more transfer lines.

In a further alternative embodiment, the feed section may comprise at least two individual feed vessels (e.g. two, three or four) with separate feed lines, wherein each feed line contains a pump suitable for pumping either liquids or slurries, that converge a mixing point or mixing chamber, which mixing point or chamber is situated inside the microwave cavity such that the individual streams may be pre-heated (e.g. to greater than ambient temperature, preferably greater than 50 °C, more preferably greater than 75 °C and most preferably greater than 100 °C) prior to mixing.

In a further embodiment, the feed section may additionally comprise:
a vessel for priming and/or cleaning, which vessel has a feed line as described hereinbefore; and/or
a mass balance for each feed vessel and vessel for priming and/or cleaning.

In yet a further embodiment, the feed vessel and vessel for priming and/or cleaning may be made from any suitable material (e.g. acid proof stainless steel AISI type 316L, Hastelloy, glass (the latter three materials may be optionally lined with glass), plastic (e.g. polyethylene, polyvinylidinefluoride (PVDF), a polytetrafluoroethylene perfluoro methylvinylether (such as, perfluoroalkoxy (PFA), poly(tetrafluoroethene)) or acid proof stainless steel AISI type 380 (optionally lined with e.g. polyethylenechlorotrifluoroethlyene (ECTFE), poly(tetrafluoroethene), a polytetrafluoroethylene perfluoro methylvinylether (such as, perfluoroalkoxy (PFA))), be capable of operating at a range of pressures (e.g. above, below or at atmospheric pressure) and may optionally further comprise:
a stainless steel stirrer lined with glass or coated with a non-stick substance (e.g. poly(tetrafluoroethene));
a reflux condenser (made from any suitable material, for example, glass, acid proof stainless steel AISI type 316L, either of which may be optionally glass lined);
a temperature measuring device;
a heater and/or cooler; and/or
a bottom valve (made from any suitable material, for example, acid proof stainless steel AISI type 316L optionally lined with glass or poly(tetrafluoroethene)) in fluid connection with the feed line and/or for drainage.

In an embodiment of the invention, the volume of the feed vessel and/or the vessel for priming and/or cleaning can be from 10 mL to 1000 L, such as from 500 mL to 500 L, from 1L to 100L, from 1 L to 10 L, e.g. from 3 L to 6 L.

In an alternative embodiment the feed vessel and vessel for priming and/or cleaning may be any vessel used in a chemical manufacturing plant.

In a further embodiment, the feed section may further comprise:
a discharge line, containing a bursting disc, in connection with the feed section at one end and a discharge container at the other end,
wherein when the internal pressure of the apparatus exceeds the pressure resistance of the bursting disc, the disc ruptures and the liquid contents of the apparatus are discharged into the discharge container.

In a further embodiment, the feed lines may be made from any suitable material (e.g. acid proof stainless steel piping poly(tetrafluoroethene), AISI type 312 or AISI type 316L, wherein the latter two may optionally be lined with glass), and may optionally further comprise:
a trace heating/cooling system;
a heat exchange device capable of heating and/or cooling;
a pressure transmitter or pressure guard interlocked with the pump and the magnetron (either directly or indirectly);
a flow rate measuring device; and/or
a valve (made from any suitable material, for example, acid proof stainless steel AISI type 316L optionally lined with glass or poly(tetrafluoroethene)) for drainage.

In yet a further embodiment, the feed lines may further comprise
a pressure transmitter or pressure guard interlocked with the pump and the magnetron (either directly or indirectly); and/or
a bursting disc.

In an embodiment of the invention, the internal diameter of the feed lines can be from 0.1 to 150 mm, such as from 0.1 mm to 100 mm, from 1 mm to 50 mm or from 2 mm to 10 mm (e.g. 6 mm).

In yet a further embodiment, the pump connected to the feed lines may be any pump suitable for pumping liquids or slurries. Suitable pumps include any that are commercially available. Particular pumps that may be mentioned include hydraulic PTFE diaphragm metering pumps (e.g. for feed vessels) and magnetic driven gear metering pumps (e.g. for vessels for priming and/or cleaning).

In a further embodiment, the mixing point or mixing chamber may be made from any suitable material (e.g. acid proof stainless steel AISI type 316L, Hastelloy, glass (the latter three materials may be optionally lined with glass), plastic (e.g. polyethylene, polyvinylidinefluoride (PVDF), a polytetrafluoroethylene perfluoro methylvinylether (such as, perfluoroalkoxy (PFA), poly(tetrafluoroethene)) or acid proof stainless steel AISI type 380 (optionally lined with e.g. polyethylenechlorotrifluoroethlyene (ECTFE), poly(tetrafluoroethene), a polytetrafluoroethylene perfluoro methylvinylether (such as, perfluoroalkoxy (PFA))), be of any suitable shape (e.g. in the form of a pipe or column), which is optionally removable and may optionally further comprise:
a trace heating/cooling system;
a heat exchange device capable of heating and/or cooling;
a mixing device (e.g. static mixer or screw conveyor or micromixer); and/or
one or more valves (made from any suitable material, for example, acid proof stainless steel AISI type 316L optionally lined with glass or poly(tetrafluoroethene)) for controlling the flow of liquid into and out of the mixing point or chamber.

In yet a further embodiment, the mixing point or mixing chamber may further comprise a valve (made from any suitable material, for example, acid proof stainless steel AISI type 316L optionally lined with glass or poly(tetrafluoroethene)) suitable for allowing the introduction of a gas into the tube-type flow reactor. The introduction of gas *via* the mixing point may allow for a gas to be used as a reagent (e.g. carbon monoxide, carbon dioxide, hydrogen) or to facilitate the unblocking and/or cleaning of the apparatus (suitable gases for this use may include, for example compressed air, or preferably nitrogen).

In an embodiment of the invention, the internal diameter of the mixing point or mixing chamber can be from 0.1 to 150 mm, such as from 0.1 mm to 100 mm, from 1 mm to 50 mm or from 2 mm to 10 mm (e.g. 6 mm).

In yet a further embodiment, the one or more transfer lines may be made from any suitable material (e.g. acid proof stainless steel piping AISI type 312, AISI type 316L or poly(tetrafluoroethene)), and may optionally further comprise:
a trace heating/cooling system;
a heat exchange device capable of heating and/or cooling; and/or
a bleed or purge valve (made from any suitable material, for example, acid proof stainless steel AISI type 316L optionally lined with glass or poly(tetrafluoroethene)) for drainage and/or sampling.

In an embodiment of the invention, the internal diameter of the transfer lines can be from 0.1 to 150 mm, such as from 0.1 mm to 100 mm, from 1 mm to 50 mm or from 2 mm to 10 mm (e.g. 6 mm).

In a further embodiment, the fluid connection between the tube-type flow reactor and the receiving section may be by one or more (e.g. one, two, three or four) product transfer lines.

In a further embodiment, the microwave heating section may further comprise a housing for the tube-type flow reactor that holds the reactor within the microwave cavity, wherein the housing is attached to the feed and receiving sections by way of the one or more transfer and product transfer lines, respectively.

In yet a further embodiment, the heating section may further comprise a waveguide tuning device.

In a further embodiment, the microwave cavity may be made of any suitable material (e.g. alumina or stainless steel) that contains the microwave energy, may be optionally filled with an inert gas (e.g. nitrogen or argon).

In yet a further embodiment, the microwave source may be a microwave generator, and may provide either a constant level, varying level or pulses of microwave power based upon settings input by the user (e.g. into a programmable logic control system).

In an embodiment of the invention, the maximum power of the microwave generator may be in the range from 1 kW to 200 kW, such as from 1.5 kW to 100 kW, from 2 kW to 50 kW, from 3 kW to 10 kW, e.g. from 4 kW to 6 kW.

In yet a further embodiment of the invention, more than one microwave generator may be used in parallel (e.g. two, three, four, five, six, seven, eight, nine or ten microwave generators).

In a further embodiment, the waveguide device may be any shape suitable for producing a travelling wave (e.g. an aperiodic travelling wave) of microwave power within the cavity (e.g. circular, rectangular or periscope-shaped), and may optionally be tuned to optimise the intensity of microwave irradiation of the tube-type flow reactor.

In yet a further embodiment, the at least one tube-type flow reactor may primarily comprise any suitable microwave-transparent material (e.g. quartz), may be of any suitable shape (e.g. be of a circular, rectangular or square cross-section that may be coiled or non-coiled so as to form, for example, a cylindrical tube), and may further comprise:
one or more temperature measurement devices (e.g. fibre optic sensors);
one or more pressure measurement devices;
a trace heating/cooling system; and/or
a stirrer.

In an embodiment of the invention the tube-type flow reactor may have an internal diameter from 0.1 to 500 mm, such as from 0.1 to 200 mm, from 0.1 mm to 165 mm, from 0.1 mm to 100 mm or from 0.5 mm to 50 mm (e.g. 1 mm to 10 mm).

In an embodiment of the invention the tube-type flow reactor may have a length from 10 cm to 10 m, such as from 50 cm to 5 m or from 1 m to 2 m (e.g. 1.5 m).

In a further embodiment, the at least one tube-type flow reactor fits within the microwave cavity.

The tube-type flow reactor housing comprises an inlet and outlet part, wherein both parts are dimensioned to hold the tube-type flow reactor within the microwave cavity and wherein the inlet part of the housing is attached to the transfer line from the feed section and the outlet part of the housing is attached to the transfer line leading to the receiving section. The tube-type flow reactor housing may be made of any material and may contain one or more seals suitable for use in a continuous flow reactor.

In a further embodiment, the microwave heating section may further comprise:
a discharge line, containing a bursting disc, in connection with the heating section at one end and a discharge container at the other end,
wherein when the internal pressure of the apparatus exceeds the pressure-resistance of the bursting disc, the disc ruptures and the liquid contents of the apparatus are discharged into the discharge container.

In a further embodiment, the receiving section may further comprise a multi-way valve (made from any suitable material, for example, acid proof stainless steel AISI type 316L optionally lined with glass or poly(tetrafluoroethene)) connected to the one or more product transfer lines from the heating section, which valve is in turn connected to one or more (e.g. 2, 3, 4, 5, 6, 7, 8, 9, or 10) independent receiving vessels via separate product transfer lines.

In yet a further embodiment, the receiving section may further comprise one or more sight-glasses situated within the product transfer line(s).

In a further embodiment, the receiving section may further comprise columns or cartridges situated within the product transfer line(s) that are optionally easily removable and replaceable during the operation of the apparatus. The columns and cartridges may be used for chromatographic separation (e.g. chiral and/or achiral HPLC or simulated moving bed chromatography), or for purification of the product by removing impurities and/or excess chemical reactants or reagents or by trapping the product(s) (e.g. activated charcoal may be used to remove coloured impurities).

In a further embodiment, the receiving section may further comprise:
a discharge line, containing a bursting disc, in connection with the heating section at one end and a discharge container at the other end; and/or
a discharge line, containing a bursting disc, in connection with each receiving vessel at one end and a discharge container at the other end,
wherein, when the internal pressure of the apparatus exceeds the pressure resistance of the bursting disc, the disc ruptures and the liquid contents of the apparatus are discharged into the discharge containers.

In a further embodiment, the receiving vessels may be made from any suitable material (e.g. acid proof stainless steel AISI type 316L, Hastelloy, glass (the latter three materials may be optionally lined with glass), plastic (e.g. polyethylene, polyvinylidinefluoride (PVDF), a polytetrafluoroethylene perfluoro methylvinylether (such as, perfluoroalkoxy (PFA), poly(tetrafluoroethene)) or acid proof stainless steel AISI type 380 (optionally lined with e.g. polyethylenechlorotrifluoroethlyene (ECTFE), poly(tetrafluoroethene), a polytetrafluoroethylene perfluoro methylvinylether (such as, perfluoroalkoxy (PFA))), be capable of operating at a range of pressures (e.g. above, below or atmospheric pressure) and may optionally further comprise:
a magnetically or mechanically driven stirrer (e.g. stainless steel or stainless steel lined with glass or coated with a non-stick substance (e.g.-poly(tetrafluoroethene)));
a temperature measuring device;
a pressure measuring device;
a means of heating or cooling; and/or
a bottom valve (made from any suitable material, for example, acid proof stainless steel AISI type 316L optionally lined with glass or poly(tetrafluoroethene)).

In an embodiment of the invention, the volume of the receiving vessels can be from 0.1 to 500 L, such as from 0.1 to 200 L, from 0.1 mm to 165 L, from 0.1 L to 100 L or from 0.5 L to 50 L (e.g. 1 L to 10 L).

In yet a further embodiment, the product transfer lines may be made from any suitable material (e.g. acid proof stainless steel piping poly(tetrafluoroethene), AISI type 312 or AISI type 316L, wherein the latter two may optionally be lined with glass), and may optionally further comprise:
a trace heating/cooling system; and/or
a heat exchange device capable of heating or cooling.

In yet a further embodiment, the product transfer lines may additionally comprise:
a bleed or purge valve for drainage and/or sampling; and/or
an on-line analysis device.

In an embodiment of the invention, the internal diameter of the product transfer lines can be from 0.1 to 500 mm, such as from 0.1 to 200 mm, from 0.1 mm to 165 mm, from 0.1 mm to 100 mm or from 0.5 mm to 50 mm (e.g. 1 mm to 10 mm).

In a further embodiment, each receiving vessel is connected to a separate back-pressure regulator.

In yet a further embodiment, each back-pressure regulator comprises a back-pressure valve with a pressure transmitter and/or pressure controller. As discussed hereinbefore, the back-pressure regulator may be connected via any suitable means (e.g. piping) to a receiving vessel.

In a further embodiment, a separate back-pressure regulator is connected to each receiving vessel.

In a further embodiment of the invention, the continuous flow microwave apparatus for microwave assisted organic synthesis may further comprise a separate gas feed line in fluid connection with each receiving vessel such that the feed line is capable of introducing gas into the, or each, receiving vessel.

In yet a further embodiment, each gas feed line is situated such that it is fluidly connected between the receiving vessel and back-pressure regulator (e.g. by way of a T-junction).

In a still further embodiment, each gas feed line is fluidly connected at a point between the back-pressure regulator and the receiving vessel, preferably the point of connection is at least 5 cm (e.g. 10 cm, 15 cm, 20, cm, 30 cm, 40 cm, 50 cm 60 cm, 70 cm, 80 cm, 90 cm 100 cm) from the receiving vessel. Surprisingly, placing the gas feed line between the back-pressure regulator results in a reduction of volatile organic emissions. Any gas compatible with organic reactions may be used (e.g. air, nitrogen, argon and the like). Preferably the gas is nitrogen.

As the microwave apparatus is designed for continuous flow, any reaction scale may be used (e.g. from laboratory scale (e.g. 1 to 3 L) through to a large industrial scale (e.g. 100,000 L and above).

In a further embodiment, the continuous flow microwave apparatus may further comprise a programmable logic control (PLC) system and measuring devices attached to the apparatus (e.g. a pressure sensor attached to the back-pressure regulator, a temperature sensing device attached to a product transfer line, a power sensor attached to the magnetron), for measuring and operating, displaying and logging any or all of the variables that may be affected by the apparatus (e.g. pressure, temperature, microwave power and flow rate).

### Detailed Description of the Invention

The invention will now be discussed in relation to the following non-limiting figures.
Figure 1: a flow diagram of a continuous flow microwave reactor system according to one embodiment of the present invention.
Figure 2: a flow diagram of a continuous flow microwave reactor system according to another embodiment of the present invention.
Figure 3: a schematic diagram of a reactor system similar to that represented in Figure 2.

It has been surprisingly found that, for a continuous flow microwave apparatus, employing a back-pressure regulator that directly regulates gas pressure in the receiving vessel(s) reduces the temperature and pressure fluctuations of the apparatus compared to systems employing other forms of pressure regulation.

In addition, it has been surprisingly found that placing a gas feed line at a point between the back-pressure regulator and the receiving vessel, with the point of connection being at least 10 cm from the receiving vessel, minimises the emission of solvents (and/or other organic matter) from the receiving vessels.

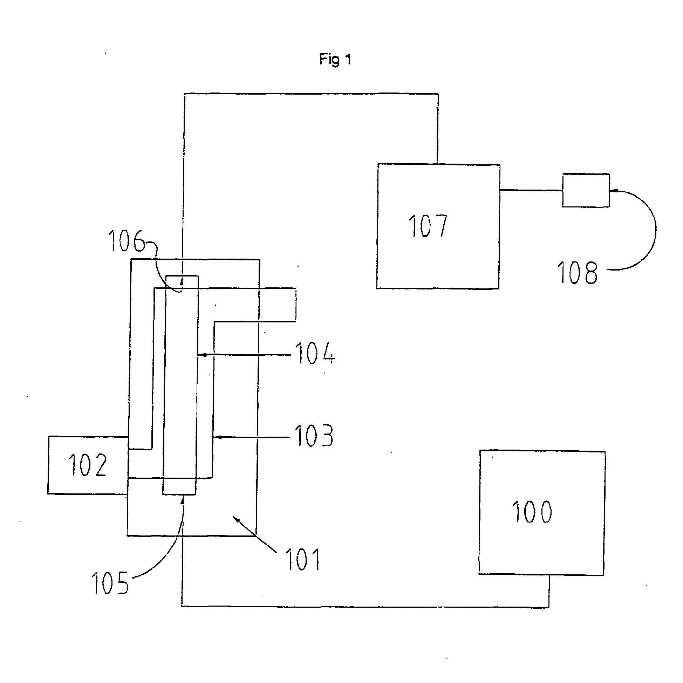

As shown in Figure 1, the apparatus of the present invention may comprise: a feed section comprising a feed vessel (100);
a microwave heating section comprising a microwave cavity (101), a microwave source (102), a waveguide device (103) and a tube-type flow reactor (104), which reactor is at least partially surrounded by the waveguide (103) and has a fluid inlet (105) in fluid connection with the feed vessel (100) and fluid outlet (106) in fluid connection with a receiving vessel (107); and
a receiving section comprising the receiving vessel (107), which is connected to a back-pressure regulator (108). In use, the receiving vessel (107) is at least partly-filled with a gas and the back-pressure regulator directly regulates the pressure of that gas (and thereby indirectly affects the pressure of the other fluids in the apparatus that are in fluid connection with the receiving vessel).

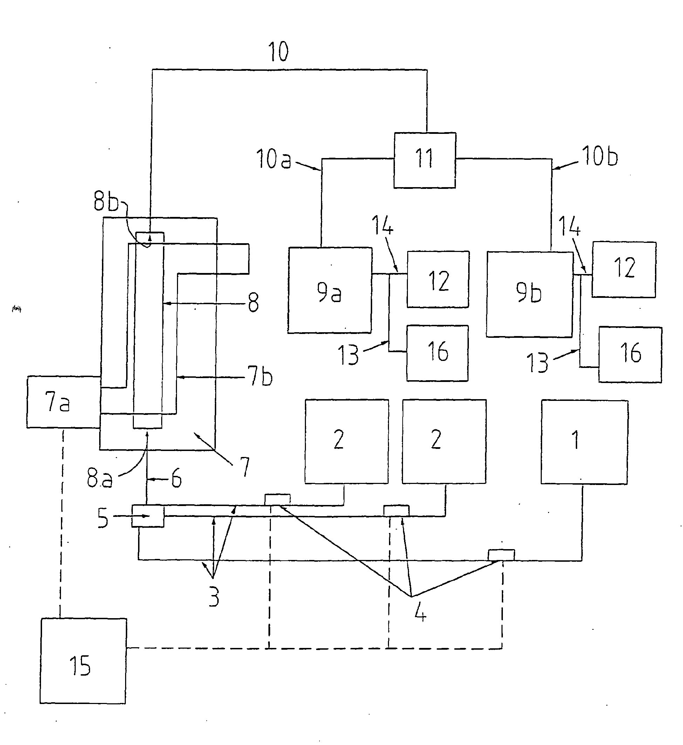

When the embodiment of Figure 1 is operated, the feed vessel (100) is filled with a mixture, comprising a reactant or reactants and/or solvent or solvents and/or a number of reagents, which then flows from the feed vessel (100) through the tube-type flow reactor (104) and into the receiving vessel (107). As discussed in more detail below in relation to Figure 2, the receiving vessel (107) can be pressurised to a particular pressure with a gas (e.g. air or nitrogen) at the start and during the process. As the mixture fills the receiving vessel (107), gas is expelled through the back-pressure regulator (108) to maintain the gas pressure at a pre-set level within the receiving vessel (107).

As the mixture flows from the feed vessel (100), through the tube-type flow reactor (104) that is contained within the microwave cavity (101), it is heated by microwave energy inside the waveguide device (103), produced by the microwave source (102). The mixture then undergoes a chemical transformation to produce the desired chemical product. As will be appreciated, the chemical method may utilise catalysts which do not undergo chemical transformations and chemical reagents that may be consumed during the reaction to produce by-products.

As shown in Figure 2, an alternative embodiment of the invention may be an apparatus comprising:
a feed section comprising a vessel for priming and/or cleaning (1), two feed vessels (2), feed lines (3), each feed line containing a pump (4), a mixing point (5) connected by a transfer line (6) to the rest of the apparatus;
a microwave heating section comprising a microwave cavity (7), a microwave source (7a), a waveguide device (7b) and a tube-type flow reactor (8), which reactor is at least partially surrounded by the waveguide (7b) and has a fluid inlet (8a) connected to transfer line (6) and a fluid outlet (8b), connected to two receiving vessels (9a and 9b) by way of product transfer lines (10, 10a and 10b) and a three-way valve (11); and
a receiving section comprising the two receiving vessels (9a and 9b), each connected to a back-pressure regulator (12), optionally incorporating a pressure sensing device (not depicted), and a gas feed line (13) connected to a gas source (16). The back-pressure regulators (12) are connected to the receiving vessels (9a or 9b) by piping (14) and the gas feed lines (13) are in gas communication with the piping (14) in between the receiving vessel (9a or 9b) and the back-pressure regulators (12). For example, the gas feed lines can be connected at a point between the back-pressure regulators (12) and the receiving vessels (9a and 9b) that is at least 5 cm from said receiving vessels.

As described in more detail below, gas from the gas source (16), can continuously (or intermittently) flow through the gas feed lines (13) into the receiving vessels (9a and 9b) via pipes (14). When the pressure of the gas within the receiving vessels (9a and 9b) exceeds a preset level, gas is expelled through the back-pressure regulators (12).

In order to operate the apparatus, a programmable logic control (PLC) system (15) is connected to the apparatus, which can control the heating and/or cooling of the apparatus (amongst other things). For ease of operation, the apparatus of Figure 2 may also incorporate appropriate sensors (e.g. temperature and/or pressure sensors attached to the product transfer line, the tube-type flow reactor or the back-pressure regulator) and interlocking mechanisms (e.g. a mechanism that switches off the magnetron if the preset temperature is exceeded) in electrical communication with the PLC system.

Although not depicted in Figure 2, the vessel for priming and/or cleaning (1), the feed vessels (2), and receiving vessels (9a and 9b) additionally comprise a bottom valve. In the case of the vessel for priming and/or cleaning (1) and the feed vessels (2), the bottom valve can be in fluid connection with feed lines (3). In the case of the receiving vessels (9a and 9b), the bottom valve may be used for drainage and/or cleaning. Although not depicted in Figure 2, other embodiments of the invention include those in which any one or more of the feed vessels (2), feed lines (3), transfer line (6), tube-type reactor, receiving vessels (9a and 9b) and product transfer lines (10, 10a and 10b) contain either a trace heating/cooling system or a heat exchange device capable of heating and/or cooling.

Although not depicted in Figure 2, other embodiments of the invention include those in which the apparatus the tube-type flow reactor (8) includes a recirculation loop in order to enable processing of stop-flow and batch reactions within the apparatus.

As will be appreciated, the reaction mixture exiting the tube-type flow reactor (8) may still contain unconverted reactants and/or reagents. The addition of a trace heating/cooling system or a heat exchange device capable of heating the product transfer lines (10, 10a and 10b) may allow for increased (or complete) conversion of the reactants and/or reagents to product(s).

Although not depicted in Figure 2, other embodiments of the invention include those containing two or more microwave heating sections which may ensure complete conversion of unconverted reactants and/or reagents to product(s).

In order to cope with possible fluid emissions from the apparatus, the apparatus (or at least parts of the apparatus that carry or contain fluids) may conveniently be located inside a ventilated cavity (e.g. a fume hood, such as a stainless steel frame fume hood with glass sliding doors). The PLC system for the apparatus, along with the magnetron, electrical power supply unit and media utilities (i.e. water, compressed air and nitrogen gas) may be placed outside the ventilated cavity. The ventilated cavity may be mobile and can be transferred and set up at different locations.

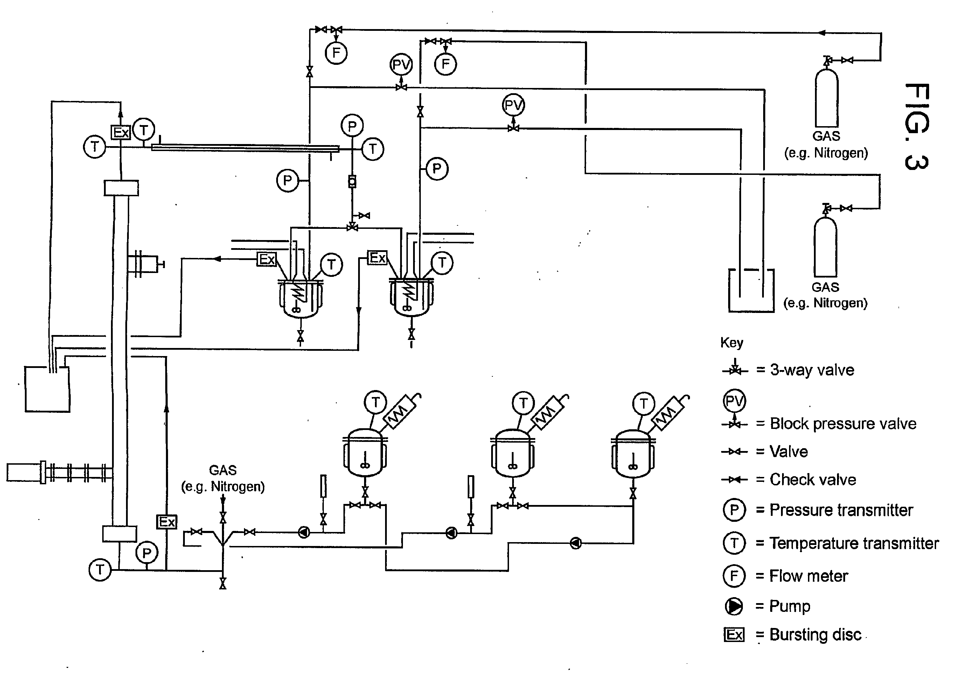

As mentioned above, Figure 3 provides a schematic diagram of a reactor system similar to that represented in Figure 2 and which can be operated in line with the procedure provided below.

### General Process Control

Certain embodiments of the apparatus of the invention employ a PLC system. The PLC system can measure, control, display and log the process data (e.g. pressure, temperature, and microwave power) and control the heating and cooling of the apparatus. Pumps, stirrers and ventilation fans for a ventilated cavity (e.g. a fume hood) can also, if desired, be operated via the PLC system.

As an additional safety feature, the PLC system can also provide preset alarm levels, for example, to monitor and control high temperature, high pressure and flowrate. In this event, when the preset levels are exceeded, an alert is displayed on the PLC and/or an audible alert is sounded and an interlocking system shuts down the microwave generator.

Referring to Figure 2, embodiments of the invention include those in which each feed line (3) has trace heating to the mixing point (5) to maintain feed temperature. The transfer line (6) from the mixing point to the microwave flow reactor may also have trace heating. The product transfer line (10) after the outlet of the microwave section to the receiving vessels (9a and 9b) may have a combined trace heating/cooling and heat exchange jacket, which may be used for cooling, when applicable. The priming vessel (1), feed vessels (2) and receiving vessels (9a and 9b) may contain a combined heating and cooling system. A sight glass may be included in the product transfer (10) line before that line enters the three-way valve (11). Such a sight glass can enable visual inspection of the product flow to the receiving vessels (9a and 9b). A bleed valve in the product transfer line (10) may be included for in-process control sampling, i.e. analytical measurement of the conversion rate of starting material to product or other items of interest. Additionally, an on-line analysis device can be included in the product transfer line (10) for in-process control.

### Operation of the Apparatus

The following description of apparatus operation relates to the embodiment of the invention depicted in Figure 2.

### Priming operation

The purpose of the priming procedure is to verify proper functioning of the pumps and clear out any pockets of gas that may be trapped in parts of the apparatus that are, in operation, normally occupied by liquid.

Liquid (e.g. solvent or reaction mixture) is charged to the priming/cleaning vessel (1) and one of the receiving vessels (e.g. 9a) is connected to the system via the three-way valve (11). The valves in the system from the priming vessel (1) to the chosen receiving vessel (e.g. 9a) are opened and any drainage valves are closed. The bottom valve of the priming vessel (1) is opened and the pump (4) is started at suitable speed. Liquid is pumped through the apparatus until liquid enters the chosen receiving vessel (e.g. 9a). The bottom valve of the chosen receiving vessel (e.g. 9a) is closed and the back-pressure regulator (12) is set to the pressure level necessary for the chemical method (e.g. between 0 and 20 bar, normally the back-pressure regulator is set about 1 or 2 bar above the vapour pressure of the reaction mixture at the desired reaction temperature) and the receiving vessel (e.g. 9a) is pressurised with nitrogen from a nitrogen gas supply (16) to a level just above the set pressure of the apparatus, so that a positive flow of nitrogen is detected on the flow indicator in the nitrogen supply line (e.g. up to 100 mL/minute). The second receiving vessel (e.g. 9b) is also pressurized with nitrogen from either the same or separate nitrogen source (16), but set on stand by. If applicable, the trace heating/cooling system and/or heating or cooling systems that may be present are switched on according to the requirements of the chemical method to be run.

As will be appreciated, any combination of additional heating and/or cooling can be applied, depending on the chemical method. For example, the chemical method may require that the trace heating/cooling system on product transfer lines (10, 10a and 10b) and the cooling system of the receiving vessels (9a and 9b) be switched on.

### Charging of feed vessels

While the priming procedure is running, raw materials, reagents and solvents are added to one or both of the feed vessels (2), according to the chemical method to be run. The mixtures in the feed vessels are stirred and, according to the chemical method being performed, heating or cooling may be applied.

### Start up

During the priming operation, the microwave generator (e.g. a 2.45 GHz magnetron producing 2 kW, 6 kW or 10 kW) is powered up once the raw materials and reagents in the feed vessels are ready for use (e.g. when the optimal temperature is reached in both feed vessels (2)). When a stable process temperature (e.g. up to a maximum of 200°C) is reached in the tube-type flow reactor (8), the priming is stopped by closing the bottom valve of the vessel for priming and/or cleaning (1), the pump (4) in the feed line (3) attached thereto and the 3-way valve (11) turned to the second receiving vessel (e.g. 9b). The reaction is initiated by opening the bottom valves of the feed vessels (2) and starting the feed pumps (4). The first receiving vessel (e.g. 9a) is depressurised, emptied of the priming fluid, repressurised and placed in standby mode.

### Processing

The flow rates (0-100 ml/min) from each feed vessel are set according to the desired chemical method. The flow rates may be calibrated prior to starting the process by pre-calibration of the pumps. The flow rate may be checked and adjusted during operation by including a valve in the feed lines connected to a graduated cylinder (not shown), wherein the flow rate is checked by opening the valve to the graduated cylinder, closing the bottom valve of the feed vessel of interest and measuring the time between two set levels on the cylinder. The flow rate determines the residence time of the reagents in the tube-type flow reactor (8), wherein the residence time may be from 6 seconds to 10 minutes depending upon the flow rate from the feed vessels.

Processing is continued until the receiving vessel (e.g. 9b) has reached its preset fill level. At this point, the product stream is directed to the other receiving vessel (e.g. 9a) by turning the three-way tap (11). The full receiving vessel (e.g. 9b) is depressurised and, depending on scale, emptied directly to a holding tank, or to a reactor in an existing plant for work up, or to a transferable container for work up in lab. The emptied receiving vessel (e.g. 9b) is then repressurised (placed in standby mode). When the other receiving vessel (e.g. 9a) is full, the product stream is switched back to the now empty receiving (e.g. 9b). This process may be repeated until the required amount of product has been obtained.

### Close down procedure

The three-way valve is initially turned to the standby receiving vessel (9a or 9b) and then the microwave generator (7) is turned off, followed by stopping the feed pumps (4). The apparatus is rinsed by pumping a preset volume of a suitable solvent from the priming/cleaning vessel (1) to the receiving vessels (9a and 9b). Heating or cooling of feed vessels (2), receiving vessels (9a and 9b) and feeding vessels (2), discharge and product transfer lines (10) are closed down. The complete system can then be dismantled, cleaned further and inspected.

As will be appreciated, other embodiments may be used according to the invention described herein. For example a more simple feed section for the apparatus containing a single feed vessel (2) and a single feed line (3) containing a pump (4) can be used. If such an arrangement is used, the single feed vessel will be used both for priming the apparatus and for feeding the reaction mixture into the system. For example, the feed vessel (2) can be pre-loaded with the required solvent for the reaction (or the reaction mixture) for priming the apparatus and, once the apparatus is primed, the reagents (reaction mixture) may be added directly to the feed vessel (2).

### Chemical Reactions

As mentioned above, the microwave apparatus is capable of conducting chemical reactions from laboratory scale through to industrial scale.

The microwave apparatus described herein may be used to run any chemical reaction wherein at least one liquid is used, provided that the reaction mixture is either a homogeneous solution or a heterogeneous mixture.

Therefore, in a further embodiment of the invention, there is provided a method of conducting a chemical reaction using the microwave apparatus described herein, wherein the reaction mixture is either a homogeneous solution or heterogeneous mixture.

By "homogeneous solution" we mean that the reaction components are dissolved in a liquid (or in a mixture of liquids).

By "heterogeneous mixture" we mean that at least one or more (e.g. one, two or three) of the reaction components are partially soluble or fully insoluble in the liquids present in the mixture, wherein the insoluble components form a slurry, suspension or gas bubbles within the liquids present in the mixture.

In an aspect of the invention, when the method involves a heterogeneous mixture, the average diameter of solid particles within that mixture is between 0.1 nm and 5000 µm (e.g. between 0.001 µm and 1000 µm, between 0.01 µm and 500 µm, preferably between 0.1 µm and 250 µm).

When the at least one liquid is a solvent or solvents, any solvent or mixture thereof suitable for use in the chemical industry may be used (e.g. the following solvents or any mixtures thereof may be used: water; methanol; ethanol; propanol; butanol; tetrahydrofuran; diethyl ether; pyridine; dimethylsulfoxide; dimethylformamide; hexanes; heptane; toluene; or xylenes).

In a further aspect of the invention, the chemical reaction may be a cross-coupling, nucleophilic substitution, electrophilic substitution, addition, elimination, condensation, isomerisation, esterification, halogenation, hydrolysis, reduction, hydrogenation, hydrogenolysis, oxidation, nitration, cycloaddition, carbonylation, decarbonylation, carboxylation, decarboxylation, hydroformylation or biocatalysis reaction.

When used herein the term *"cross-coupling reaction"* includes references to reactions wherein a carbon-carbon bond or carbon-heteroatom bond (e.g. carbon-nitrogen, carbon-oxygen, carbon-sulfur or carbon-phosphorous) is formed.

In one embodiment, the chemical reaction is a carbon-carbon bond forming reaction (e.g. cyanation, Heck reaction, Sonogashira reaction, Negishi reaction, Suzuki Reaction). Preferably, the carbon-carbon bond forming reaction is a Suzuki reaction catalysed by a (heterogeneous) supported metal catalyst (e.g. Pd/C).

In one embodiment, the chemical reaction is a carbon-heteroatom bond forming reaction (e.g. Buchwald-Hartwig amination reaction).

In one embodiment, the chemical reaction is a reaction forming a carbocycle or heterocycle reaction.

In one embodiment, the chemical reaction is a fluorination reaction.

In a further embodiment the chemical reaction is a hydrogenation or hydrogenolysis reaction (e.g. an aromatic nitro group hydrogenation reaction). The hydrogenation or hydrogenolysis reaction may be conducted either using hydrogen gas or under transfer hydrogenation conditions.

### Examples

The following examples were conducted on a system similar to that illustrated in Figure 1, using a microwave source with a maximum power of 2 kW and a cylindrical tube-type flow reactor with a length of 70 cm and an internal diameter of 6 mm, wherein the tube-type flow reactor is entirely within the waveguide device in the microwave cavity.

### Example 1

### Preparation of 3-phenylbenzoic acid

Potassium hydroxide (71.3 g, 1.27 mole), potassium carbonate (99.5 g, 0.72 mole), phenylboronic acid (79.9 g, 0.66 mole) and 3-bromobenzoic acid (130.8 g, 0.65 mole) were added to water (600 mL). The mixture was stirred at ambient temperature until a clear solution was obtained. The catalyst, 10% Pd/C (100 mg, 50% moisture), was added and the resulting slurry was pumped through the flow reactor (20mL/min, 150°C, 9 bar pressure). After work-up, 128g product was obtained (98% yield).

### Example 2

### Preparation of Diethyl 2,6-dimethyl-4-(3-nitrophenyl)-1,4-dihydropyridine-3,5-dicarboxylate

3-Nitrobenzaldehyde (1093 g, 7.2 mole) and ethyl 3-oxobutanoate (1883 g, 14.5 mole) were dissolved in ammonia (aq, 25% w/w, 480g, 7.1 mole). Ethanol was added to the mixture at such rate that the temperature was kept below 30°C. The solution was pumped through the flow reactor (20 mL/min, 150°C, 9 bar pressure). The product crystallised directly from the reaction mixture and was filtered and washed with ethanol. 1.80 kg (68% yield) product was isolated.

### Example 3

### Preparation of 3'-Nitrobiphenyl-4-carbaldehyde

4-Bromobenzaldehyde (21.5 kg,117.3 mole) and 3-nitrophenylboronic acid (20.4 kg, 121.9 mole) were added to dimethylformamide (32.2 L). Water (13.8 L) and potassium acetate (12.0 kg, 121.9 mole) were added and the resulting mixture stirred until a solution was obtained. The catalyst, 10% Pd/C (460g, 50% moisture), was added and the resulting slurry was pumped through the flow reactor (60 mL/min, 180°C, 8 bar pressure). After heating the product mixture to 70-80°C, the catalyst was filtered off and water added before cooling the mixture to 25°C. The product (21 kg, 83% yield) was filtered off and washed with dimethylformamide/water.

## Claims

1. An apparatus for continuous or stopped fluid flow microwave assisted organic synthesis, said apparatus comprising:
a feed section comprising a feed vessel;
a microwave heating section comprising a microwave cavity, a microwave source, a waveguide device and a tube-type flow reactor having a fluid inlet and a fluid outlet; and
a receiving section comprising a receiving vessel that is connected to a back-pressure regulator, and, in use, is at least part-filled with gas,
wherein the tube-type flow reactor contains at least one section that is microwave-transparent and is surrounded by a portion of the waveguide device that can be irradiated with microwaves from the microwave source,
the fluid inlet of the tube-type flow reactor is in fluid connection with the feed section,
the fluid outlet of the tube-type flow reactor is in fluid connection with the receiving section, and
said back-pressure regulator directly regulates the pressure of the gas in said receiving vessel.

2. The apparatus of Claim 1, wherein the fluid connection between the tube-type flow reactor and the feed section is one or more transfer lines.

3. The apparatus of Claim 2, wherein the feed section comprises either:
a feed vessel with a feed line, wherein the feed line contains a pump suitable for pumping either liquids or slurries, which is connected to the fluid inlet of the tube-type flow reactor by one or more transfer lines; or
at least two individual feed vessels with separate feed lines, wherein each feed line contains a pump suitable for pumping either liquids or slurries, that converge at a mixing point or mixing chamber, which mixing point or chamber is connected to the fluid inlet of the tube-type flow reactor by one or more transfer lines.

4. The apparatus of any one of Claims 1 to 3, wherein the fluid connection between the tube-type flow reactor and the receiving section is by one or more product transfer lines.

5. The apparatus of any one of Claims 1 to 4, wherein the heating section further comprises a housing for the tube-type flow reactor that holds the reactor within the microwave cavity, wherein the housing is attached to the feed and receiving sections by way of the one or more transfer and product transfer lines, respectively.

6. The apparatus of Claim 5, wherein the tube-type flow reactor housing comprises an inlet and outlet part, wherein both parts are dimensioned to hold the tube-type flow reactor within the microwave cavity and wherein the inlet part of the housing is attached to the transfer line from the feed section and the outlet part of the housing is attached to the transfer line leading to the receiving section.

7. The apparatus of any one of Claims 4 to 6, wherein the receiving section further comprises a multi-way valve connected to the one or more product transfer lines from the heating section, which valve is in turn connected to the one or more receiving vessels via separate product transfer lines.

8. The apparatus of any one of Claims 1 to 7, wherein the back-pressure regulator comprises a back-pressure valve with a pressure transmitter and/or pressure controller.

9. The apparatus of any one of Claims 1 to 8, wherein a separate back-pressure regulator is connected to each receiving vessel.

10. The apparatus of any one of Claims 1 to 9, further comprising a separate gas feed line in fluid connection with each receiving vessel such that the feed line is capable of introducing gas into the, or each, receiving vessel.

11. The apparatus of Claim 10, wherein each gas feed line is fluidly connected at a point between the back-pressure regulator and the receiving vessel.

12. The apparatus of any one of Claims 1 to 11, further comprising a programmable logic control system and measuring devices attached to the apparatus, for measuring and operating, displaying and logging any or all of the variables that may be affected by the apparatus.

13. A method of conducting a chemical reaction using the microwave apparatus of any one of Claims 1 to 12, wherein the reaction mixture is either a homogeneous solution or heterogeneous mixture.

14. The method of Claim 13, wherein:
when the method involves a heterogeneous solution, the average diameter of solid particles within that solution is between 0.1 nm and 5000 µm; and/or
the chemical reaction is a cross-coupling, nucleophilic substitution, electrophilic substitution, addition, elimination, condensation, isomerisation, esterification, halogenation, hydrolysis, reduction, hydrogenation, hydrogenolysis, oxidation, nitration, cycloaddition, carbonylation, decarbonylation, carboxylation, decarboxylation, hydroformylation or biocatalysis reaction.

15. The method of Claim 13 or Claim 14, wherein the chemical reaction is a Suzuki reaction, or a hydrogenation or hydrogenolysis reaction.

## Patentansprüche

1. Apparatur zur kontinuierlichen oder zur Mikrowellenunterstützten, organischen Synthese mit dem Stopped-Flow-Verfahren, wobei die Apparatur Folgendes aufweist:
einen Zuführungsabschnitt, der einen Vorlagebehälter aufweist;
einen Mikrowellen-Erwärmungsabschnitt, der eine Mikrowellenkammer, eine Mikrowellenquelle; eine Wellenleiter-Vorrichtung und einen rohrförmigen Strömungsreaktor mit einem Fluid-Einlass und einem Fluid-Auslass aufweist; und
einen Aufnahmeabschnitt, der ein Aufnahmegefäß aufweist, das mit einem Gegendruck-Regler verbunden ist und während der Verwendung mindestens teilweise mit Gas gefüllt ist,
wobei der rohrförmige Strömungsreaktor mindestens einen Abschnitt enthält, der für Mikrowellen durchlässig ist und der von einem Teilbereich der Wellenleiter-Vorrichtung umgeben ist, der mit Mikrowellen aus einer Mikrowellen-Quelle bestrahlt werden kann,
wobei der Fluid-Einlass des rohrförmigen Strömungsreaktors mit den Zuführungsabschnitt in Fluidverbindung steht,
wobei der Fluid-Auslass des rohrförmigen Strömungsreaktors in Fluidverbindung mit dem Aufnahmeabschnitt steht, und
wobei der Gegendruck-Regler unmittelbar den Druck des Gases in dem Aufnahmegefäß reguliert.

2. Apparatur nach Anspruch 1, wobei die Fluidverbindung zwischen dem rohrförmigen Strömungsreaktor und dem Zuführungsabschnitt aus einer oder aus mehreren Transferleitungen besteht.

3. Apparatur nach Anspruch 2, wobei der Zuführungsabschnitt entweder:
einen Vorlagebehälter mit einer Zuführungsleitung aufweist, wobei die Zuführungsleitung eine Pumpe enthält, die für das Pumpen von Flüssigkeiten oder Aufschlämmungen geeignet ist, welche mit dem Fluid-Einlass des rohrförmige Strömungsreaktors durch eine oder mehrere Transferleitungen verbunden ist; oder mindestens zwei einzelne Vorlagegefäße mit getrennten Zuführungsleitungen aufweist, wobei jede Zuführungsleitung eine Pumpe enthält, die entweder zum Pumpen von Flüssigkeiten oder von Aufschlämmungen geeignet ist, welche an einem Mischpunkt oder einer Mischkammer zusammenlaufen, wobei der Mischpunkt oder die Mischkammer mit dem Fluid-Einlass des rohrförmigen Strömungsreaktors durch eine oder mehrere Transferleitungen verbunden sind.

4. Apparatur nach einem der Ansprüche 1 bis 3, wobei die Fluidverbindung zwischen dem rohrförmigen Strömungsreaktor und dem Aufnahmeabschnitt aus einer oder mehreren Produkt-Transferleitungen besteht.

5. Apparatur nach einem der Ansprüche 1 bis 4, wobei der Erwärmungsabschnitt ferner ein Gehäuse für den rohrförmigen Strömungsreaktor aufweist, welches den Reaktor innerhalb der Mikrowellenkammer hält, wobei das Gehäuse mit den Zuführungs- und den Aufnahmeabschnitten mittels einer oder mehrerer Transfer-, bezienungsweise Produkt-Transferleitungen verbunden ist.

6. Apparatur nach Anspruch 5, wobei das Gehäuse des rohrförmigen Strömungsreaktors eine Eingangs- und eine Ausgangsseite aufweist, wobei beide Seiten derart dimensioniert sind, dass sie den rohrförmigen Strömungsreaktor innerhalb der Mikrowellenkammer enthalten und wobei die Eingangsseite des Gehäuses mit der Transferleitung von dem Zuführungsabschnitt verbunden ist und die Ausgangsseite des Gehäuses mit der Transferleitung des Aufnahmeabschnitts verbunden ist.

7. Apparatur nach einem der Ansprüche 4 bis 6, wobei der Aufnahmeabschnitt ferner ein Mehrwegeventil aufweist, das mit der einen oder den mehreren Produkt-Transferleitungen des Erwärmungsabschnitts verbunden ist, wobei das Ventil wiederum mit dem einen oder den mehreren Aufnahmegefäßen über getrennte Produkt-Transferleitungen verbunden ist.

8. Apparatur nach einem der Ansprüche 1 bis 7, wobei der Gegendruck-Regler ein Gegendruckventil mit einem Druckmessumformer und/oder einem Druckregler aufweist.

9. Apparatur nach einem der Ansprüche 1 bis 8, wobei ein gesonderter Gegendruckregler mit jedem Aufnahmegefäß verbunden ist.

10. Apparatur nach einem der Ansprüche 1 bis 9, die ferner eine gesonderte Gaszuleitung in Fluidverbindung mit jedem Aufnahmegefäß derart aufweist, dass die Zuführungsleitung in der Lage ist, Gas in das, oder in jedes, Aufnahmegefäß einzuleiten.

11. Apparatur nach Anspruch 10, wobei jede Gaszuleitung an einem Punkt zwischen dem Gegendruck-Regler und dem Aufnahmegefäß fluidisch verbunden ist.

12. Apparatur nach einem der Ansprüche 1 bis 11, die ferner eine speicherprogrammierbare Steuerung und Messvorrichtungen, die an der Apparatur angebracht sind, aufweist, zum Messen und Bedienen, zum Anzeigen und Aufzeichnen von irgendeiner oder von allen Variablen, die durch die Apparatur beeinflusst sein können.

13. Verfahren zur Durchführung einer chemischen Reaktion unter Verwendung der Mikrowellen-Apparatur nach einem der Ansprüche 1 bis 12, wobei die Reaktionsmischung entweder eine homogene Lösung oder eine heterogene Mischung ist.

14. Verfahren nach Anspruch 13, wobei:
wenn das Verfahren eine heterogene Lösung umfasst, der durchschnittliche Durchmesser der festen Partikel in dieser Lösung zwischen 0,1 nm und 5.000 µm liegt; und/oder die chemische Reaktion eine Kreuzkopplungsreaktion, eine nukleophile Substitutions-, elektrophile Substitutions-, Additions-, Eliminations-, Kondensations-, Isomerisierungs-, Veresterungs-, Halogenierungs-, Hydrolyse-, Reduktions-, Hydrierungs-, Hydrogenolyse-, Oxidations-, Nitrierungs-, Cycloadditions-, Carbonylierungs-, Decarbonylierungs-, Carboxylierungs-, Decarboxylierungs-, Hydroformylierungs- oder Biokatalyse-Reaktion ist.

15. Verfahren nach Anspruch 13 oder Anspruch 14, wobei die chemische Reaktion eine Suzuki-Reaktion oder eine Hydrierungs- oder Hydrogenolyse-Reaktion ist.

## Revendications

1. Appareil de synthèse organique assistée par micro-ondes à écoulement de fluides continu ou bloqué, ledit appareil comprenant :
une section d'alimentation comprenant une cuve d'alimentation ;
une section de chauffage par micro-ondes comprenant une cavité de micro-ondes, une source de micro-ondes, un dispositif guide d'ondes et un réacteur à écoulement de type tube ayant une admission de fluides et un refoulement de fluides ; et
une section de réception comprenant une cuve de réception qui est raccordée à un régulateur de contre-pression et est remplie, en utilisation, au moins en partie de gaz,
dans lequel le réacteur à écoulement de type tube contient au moins une section qui est transparente aux micro-ondes et est entourée par une portion du dispositif guide d'ondes qui peut être irradiée par des micro-ondes provenant de la source de micro-ondes,
l'admission de fluides du réacteur à écoulement de type tube est en raccordement fluidique avec la section d'alimentation,
le refoulement de fluide du réacteur à écoulement de type tube est en raccordement fluidique avec la section de réception, et
ledit régulateur de contre-pression régule directement la pression du gaz dans ladite cuve de réception.

2. Appareil selon la revendication 1, dans lequel le raccordement fluidique entre le réacteur à écoulement de type tube et la section d'alimentation est constitué d'une ou plusieurs lignes de transfert.

3. Appareil selon la revendication 2, dans lequel la section d'alimentation comprend :
soit une cuve d'alimentation avec une ligne d'alimentation, où la ligne d'alimentation contient une pompe appropriée pour pomper soit des liquides soit des boues, qui est raccordée à l'admission de fluides du réacteur à écoulement de type tube par une ou plusieurs lignes de transfert ; ou
au moins deux cuves d'alimentation individuelles avec des lignes d'alimentation séparées, où chaque ligne d'alimentation contient une pompe appropriée pour pomper soit des liquides soit des boues, qui convergent en un point de mélange ou une chambre de mélange, lequel point ou laquelle chambre de mélange est raccordé à l'admission de fluides du réacteur à écoulement de type tube par une ou plusieurs lignes de transfert.

4. Appareil selon l'une quelconque des revendications 1 à 3, dans lequel le raccordement fluidique entre le réacteur à écoulement de type tube et la section de réception se fait par une ou plusieurs lignes de transfert de produit.

5. Appareil selon l'une quelconque des revendications 1 à 4, dans lequel la section de chauffage comprend en outre un logement pour le réacteur à écoulement de type tube qui contient le réacteur au sein de la cavité de micro-ondes, dans lequel le logement est attaché aux sections d'alimentation et de réception à l'aide d'une ou plusieurs lignes de transfert et de transfert de produit, respectivement.

6. Appareil selon la revendication 5, dans lequel le logement du réacteur à écoulement de type tube comprend une partie d'admission et une partie de refoulement, où les deux parties sont dimensionnées pour contenir le réacteur à écoulement de type tube au sein de la cavité de micro-ondes et dans lequel la partie d'admission du logement est attachée à la ligne de transfert depuis la section d'alimentation et la partie de refoulement du logement est attachée à la ligne de transfert conduisant à la section de réception.

7. Appareil selon l'une quelconque des revendications 4 à 6, dans lequel la section de réception comprend en outre une soupape multi-voies raccordée aux une ou plusieurs lignes de transfert de produit à partir de la section de chauffage, laquelle soupape est elle-même raccordée aux une ou plusieurs cuves de réception via des lignes de transfert de produit séparées.

8. Appareil selon l'une quelconque des revendications 1 à 7, dans lequel le régulateur de contre-pression comprend une soupape de contre-pression avec un émetteur de pression et/ou un contrôleur de pression.

9. Appareil selon l'une quelconque des revendications 1 à 8, dans lequel un régulateur de contre-pression séparé est raccordé à chaque cuve de réception.

10. Appareil selon l'une quelconque des revendications 1 à 9, comprenant en outre une ligne d'alimentation de gaz séparée en raccordement fluidique avec chaque cuve de réception de telle sorte que la ligne d'alimentation est capable d'introduire du gaz dans la ou chaque cuve de réception.

11. Appareil selon la revendication 10, dans lequel chaque ligne d'alimentation de gaz est raccordée fluidiquement en un point entre le régulateur de contre-pression et la cuve de réception.

12. Appareil selon l'une quelconque des revendications 1 à 11, comprenant en outre un système de commande logique programmable et des dispositifs de mesure attachés à l'appareil, permettant de mesurer et d'exploiter, d'afficher et de journalier l'une quelconque des ou toutes les variables qui peuvent être affectées par l'appareil.

13. Procédé de réalisation d'une réaction chimique utilisant l'appareil à micro-ondes selon l'une quelconque des revendications 1 à 12, dans lequel le mélange de réaction est soit une solution homogène, soit un mélange hétérogène.

14. Procédé selon la revendication 13, dans lequel :
lorsque le procédé implique une solution hétérogène, le diamètre moyen de particules solides au sein de cette solution est compris entre 0,1 nm et 5 000 µm ; et/ou
la réaction chimique est une réaction de couplage croisé, substitution nucléophile, substitution électrophile, addition, élimination, condensation, isomérisation, estérification, halogénation, hydrolyse, réduction, hydrogénation, hydrogénolyse, oxydation, nitration, cycloaddition, carbonylation, décarbonylation, carboxylation, décarboxylation, hydroformylation ou biocatalyse.

15. Procédé selon la revendication 13 ou la revendication 14, dans lequel la réaction chimique est une réaction de Suzuki, une réaction d'hydrogénation ou d'hydrogénolyse.
